Europäisches Patentamt

European Patent Office

Office européen des brevets

(19)

(11) Numéro de publication : **0 168 274**
**B1**

(12) **FASCICULE DE BREVET EUROPÉEN**

(45) Date de publication du fascicule du brevet :
19.08.87

(51) Int. Cl.⁴ : **B 62 K 25/28**, B 60 G 3/14

(21) Numéro de dépôt : 85401040.2

(22) Date de dépôt : 28.05.85

(54) Dispositif de suspension et/ou d'amortissement pour un bras support de roue de véhicule.

(30) Priorité : 08.06.84 FR 8409038

(43) Date de publication de la demande :
15.01.86 Bulletin 86/03

(45) Mention de la délivrance du brevet :
19.08.87 Bulletin 87/34

(84) Etats contractants désignés :
AT CH DE GB LI LU NL SE

(56) Documents cités :
EP-A- 0 104 426
FR-A- 2 457 799
FR-A- 2 457 800
FR-A- 2 466 386
FR-A- 2 528 003
FR-A- 2 528 790

(73) Titulaire : ELF FRANCE, Société Anonyme dite:
Tour ELF 2 place de la Coupole La Défense 6
F-92400 Courbevoie (FR)

(72) Inventeur : De Cortanze, André
49 rue du Val d'Or
F-92210 St. Cloud (FR)

(74) Mandataire : Hirsch, Marc-Roger
Cabinet Hirsch 34 rue de Bassano
F-75008 Paris (FR)

## Description

La présente invention s'applique a un dispositif de suspension et/ou d'amortissement d'un bras support rotatif d'une roue de véhicule telle que la roue arrière d'un motocycle, ledit bras support étant susceptible de se débattre par rotation autour d'un axe de liaison solidaire du châssis ou de la caisse du véhicule pour coopérer avec au moins un organe de suspension et/ou d'amortissement tel qu'un ressort et/ou un amortisseur, déjà connu, par exemple, du FR-A-2 457 799.

La suspension des véhicules à l'aide de bras supports rotatifs de suspension de chacune des roues est bien connue et donne lieu à de nombreuses applications dans le domaine de la suspension des véhicules automobiles où le bras rotatif est avantageusement rendu solidaire en rotation de l'une des extrémités d'une barre de torsion dont l'autre extrémité est ancrée au châssis du véhicule. Ces dispositions compactes et pratiques ne sont malheureusement pas applicables aux motocycles où l'on ne dispose pas d'une largeur suffisante pour loger transversalement un ressort à barre de torsion.

Dans le domaine des motocycles, on utilise généralement comme ressort de suspension un ressort hélicoïdal incorporé autour d'un vérin d'amortissement hydraulique dont les caractéristiques d'amortissement sont réglables rapidement par l'intermédiaire de crans ou de vis. Afin de permettre le réglage de ces combinés ressort-amortisseur, il est nécessaire de disposer d'une bonne accessibilité manuelle au combiné, afin de pouvoir agir sur lui avec des outils de réglage et de vissage. On a déjà proposé pour cela d'articuler une extrémité de l'amortisseur en dessous du moteur du motocycle entre le moteur et le chemin de roulement pour éviter que l'amortisseur ne soit enchâssé dans des tiges et des barres de suspension. Des systèmes de biellettes à amplification successives sont, par ailleurs, utilisés avec cette disposition de l'amortisseur en dessous du moteur afin d'obtenir un étirement de la tige d'actionnement de l'amortisseur au rebond, c'est-à-dire à la détente de la suspension et de faire en sorte que, pour un même angle de rotation du bras support, la course de la tige d'actionnement du ressort amortisseur soit variable en fonction de l'écrasement de la suspension afin de faire varier la raideur de la suspension et/ou de l'amortissement en fonction de l'écrasement de la suspension. Cette raideur augmente généralement avec l'écrasement de la suspension jusqu'à la venue en butée de la suspension sur des butées de fin de course en élastomère qui augmentent alors la raideur de la suspension de façon très brutale sans supprimer complètement l'élasticité de la suspension.

L'un des buts de la présente invention est précisément de pallier les défauts et insuffisances constatés en service sur les dispositifs de suspension à bras rotatif utilisant un ensemble ressort-amortisseur susceptible d'être logé dans une zone présentant une bonne accessibilité de réglage par exemple en dessous du moteur du véhicule. L'invention vise à permettre d'introduire le combiné ressort-amortisseur dans une zone libre située par exemple en dessous du moteur tout en le reliant au bras support par des articulations situées sur le côté du bloc moteur et donc moins exposées aux projections de la route que la partie inférieure du moteur.

A cet effet, selon l'invention, le dispositif de suspension et/ou d'amortissement comporte, disposés sur un côté du bras support, un levier à trois bras monté rotatif sur un axe de levier sensiblement parallèle à l'axe de liaison et solidaire du châssis du véhicule et dont un bras moyen est articulé par l'intermédiaire d'une bielle courte à un prolongement du bras support proche de l'articulation de liaison avec le châssis, tandis qu'un second bras court sensiblement opposé au bras moyen par rapport à l'articulation du levier à trois bras sur le châssis est relié à rotation au corps d'un bloc de suspension et/ou d'amortissement à tige(s) mobile(s) en translation et qu'un troisième bras long dudit levier à trois bras dirigé vers la roue du véhicule est articulé à l'une des extrémités d'une bielle moyenne dont l'autre extrémité est articulée à la tige mobile du bloc de suspension et/ou d'amortissement, elle-même articulée à l'une des extrémités d'une bielle longue dont l'autre extrémité est articulée au bras support du côté de la roue de manière à suspendre le bloc de suspension et/ou d'amortissement en ciseaux entre, d'une part, le second bras court du levier à trois bras et, d'autre part, l'articulation de sa tige mobile aux bielles moyenne et longue.

Selon un autre mode de réalisation de la partie de suspension du dispositif, la tige mobile en translation du bloc de suspension et/ou d'amortissement est solidaire d'une collerette qui vient en appui sur l'extrémité d'au moins un ressort hélicoïdal de suspension monté en compression de façon que son autre extrémité soit en appui sur le corps du bloc de suspension.

Afin de réduire l'encombrement dynamique du bloc de suspension et/ou d'amortissement au cours du débattement de la suspension, d'une part, la longueur des bras du levier à trois bras ainsi que la position de l'axe de levier par rapport à l'axe de liaison et, d'autre part, la longueur des bielles courte, moyenne et longue, ainsi que la position de leurs axes d'articulation, sont choisies de telle façon que la tige mobile du bloc de suspension et/ou d'amortissement reste sensiblement parallèle, soit à la surface de roulement de la roue au cours du débattement de suspension du bras support, soit à l'axe général du bras support rotatif.

Lorsque le dispositif de suspension et/ou d'amortissement selon l'invention est appliqué à un véhicule tel qu'un motocycle comportant un bloc moteur-transmission d'entraînement du véhicule, le corps de suspension et/ou d'amortissement est logé principalement en dessous du bloc moteur-transmission sur lequel est articulé le levier à trois bras dont le bras court est relié au corps de suspension et/ou d'amortissement à proximité de la sortie de ce corps hors de la projection verticale du bloc moteur-transmission.

En variante, la bielle moyenne et la bielle longue sont articulées ensemble à la tige mobile du corps de suspension et/ou d'amortissement par l'intermédiaire d'un axe d'articulation commun ou d'une pièce de liaison solidaire ou rendue solidaire de la tige mobile. La pièce de liaison peut être articulée à une extrémité d'une biellette de frein dont l'autre extrémité est articulée à un support d'étrier de frein recevant le couple de réaction de freinage de la roue et susceptible de tourner angulairement autour de l'axe de la roue sous l'effet du déplacement de la pièce de liaison.

En position d'extension maximale de la tige mobile par rapport au corps de suspension et/ou d'amortissement, la bielle longue est inclinée de préférence sensiblement à 45° par rapport à l'axe général du bras support.

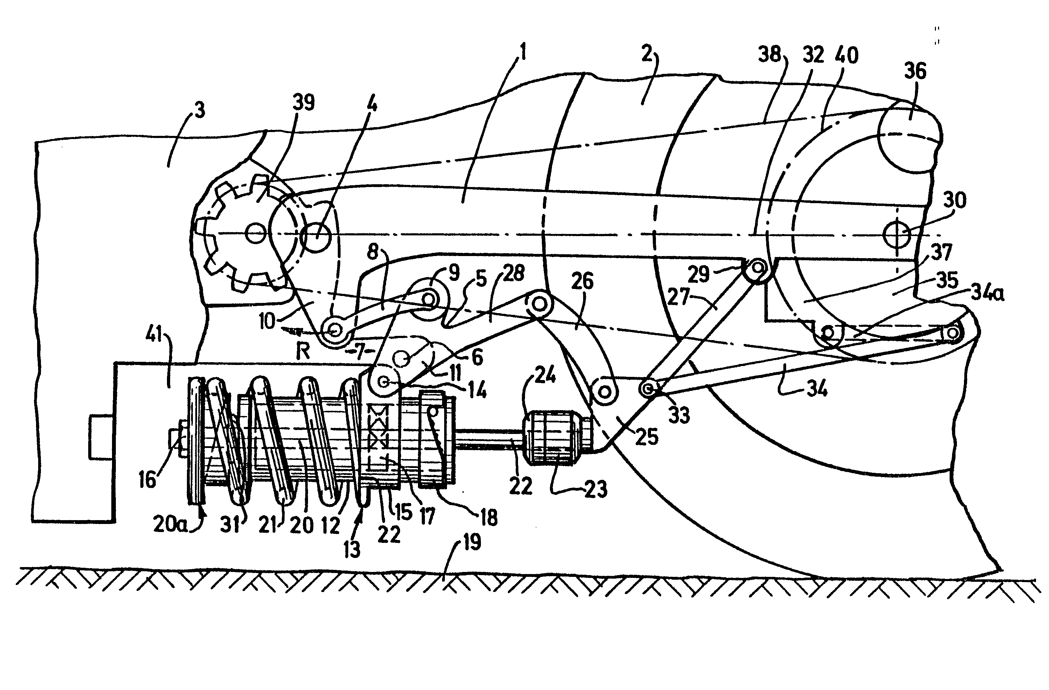

D'autres buts, avantages et caractéristiques de l'invention apparaîtront à la lecture de la description d'un mode de réalisation de l'invention, faite à titre non limitatif et en regard du dessin annexé où la figure unique représente, en vue de côté avec arrachements, le bras de support de la roue arrière motrice d'un motocycle et sa liaison, selon l'invention, au bloc moteur et à un bloc ressort amortisseur.

Le bras de support 1 de la roue arrière 2 du motocycle est relié au carter moteur-transmission 3 d'un motocycle par l'intermédiaire d'un axe de liaison 4.

Pour réaliser la suspension du bras 1, celui-ci est, par ailleurs, relié au carter 3 par l'intermédiaire d'un levier à trois bras 5 monté rotatif sur un axe 6 d'un nez en saillie 7 du carter 3. La liaison entre le levier 5 et le bras support 1 est réalisée à l'aide d'une bielle courte 8 articulée respectivement, à une extrémité au bras de longueur moyenne ou « bras moyen » 9 du levier à trois bras 5 et, à l'autre extrémité, à un prolongement 10 du bras support 1 formant levier d'amplification d'efforts pour ce bras.

Selon l'invention, le bras court 11 du levier 5 porte le corps 12 d'un bloc de suspension et d'amortissement 13 par l'intermédiaire d'un axe d'articulation 14 traversant une patte en saillie d'une ceinture de support 15 du corps 12. Dans la version représentée appliquée à la roue arrière d'un motocycle, le bloc 13 est réglable, en ce qui concerne la précontrainte de suspension, à l'aide d'une vis 16 et, en ce qui concerne les caractéristiques d'amortissement hydraulique d'un piston interne 17, par au moins un manchon rotatif 18 aisément accessible entre le bloc moteur 3 et le chemin de roulement 19 du motocycle. Le bloc 13 comporte un amortisseur à laminage d'huile dont le piston 17 est relié sur chaque face à une tige de piston. Du côté gauche du piston 17 (par rapport à la figure), la tige de piston de ressort 20 est reliée à une collerette d'appui 20a d'un ressort hélicoïdal de suspension 21 qui s'appuie à son autre extrémité sur une face annulaire 22 de la ceinture de support 15.

A droite du piston d'amortisseur 17, la tige de piston 22 fait saillie horizontalement vers l'extérieur sous la forme d'une tige mobile en translation à l'extrémité de laquelle est vissé un raccord d'articulation 23 qui porte un anneau d'amortissement de butée 24 et une plaque d'articulation 25 articulée respectivement, à l'extrémité d'une bielle moyenne 26 et à l'extrémité d'une bielle longue 27. La bielle moyenne 26 est articulée à son autre extrémité au bras long 28 du levier 5. La bielle longue 27 est articulée à son autre extrémité à une patte d'attache 29 du bras 1 située du côté de l'axe 30 de la roue 2 de telle façon que, lorsque la suspension est en position de choc telle que représentée sur la figure, c'est-à-dire avec le ressort de suspension 21 dans son état de compression maximale (la butée en élastomère 31 de la collerette d'appui 20a étant en appui sur l'extrémité du corps d'amortisseur 12), elle soit inclinée sensiblement à 45° par rapport à l'axe général 32 d'alignement du bras support 1, lui-même sensiblement parallèle au chemin de roulement 19.

La plaque d'articulation 25 peut, en outre être reliée par tout moyen d'articulation, tel que l'axe 33 d'articulation de la bielle longue 27, à une biellette 34 de retenue du couple de freinage appliqué à une plaque support 35 d'un étrier de frein à disque 36 susceptible de tourner d'un angle limité autour de l'axe 30 de la roue 2. La biellette 34 peut être supprimée et remplacée par la classique biellette courte d'étrier de frein 34a représentée en pointillés et reliant une patte d'attache 37 du bras support 1 à la plaque de frein 35. Pour permettre le passage, la pose et la dépose de la chaîne d'entraînement 38 de la roue arrière 2 reliant un pignon 39 de sortie de transmission à la couronne d'entraînement 40 de la roue 2, les divers leviers, bielles et biellette qui viennent d'être énumérés et décrits sont disposés latéralement par rapport à l'axe général 32 du bras support 1 et peuvent, le cas échéant, être réalisés en double de chaque côté du bras support.

Le fonctionnement du dispositif de suspension qui vient d'être décrit va maintenant être explicité. Comme on le voit sur la figure, le corps d'amortisseur 12 est logé presque entièrement en-dessous du carter 3 du bloc moteur-transmission, seuls le manchon rotatif 18 de réglage d'amortissement et la tige de piston 22 dépassant de la projection verticale du carter 3 pour assurer la liaison en ciseau entre les bielles 26 et 27 et la biellette 34 d'une part et, d'autre part, le bras court 11 du levier à trois bras 5 disposé à proximité de la sortie du corps d'amortisseur 12 hors de la projection verticale du carter 3. Le ressort de suspension 21 relativement plus encombrant que le corps d'amortisseur 12 est, par contre, logé entièrement en-dessous du carter 3 et est représenté sur la figure en position de choc en termes de débattement de suspension, c'est-à-dire en position de compression maximale causée par exemple par le passage de la roue arrière 2 sur une bosse en saillie du chemin de roulement 19.

Après le choc de la suspension, la réaction du ressort 21 tend à rappeler vers le haut le bloc moteur-suspension 3 constituant avec le conducteur du motocycle la masse principale suspendue du motocycle. Pour cela, la bielle 8 exerce un effort de réaction ou de rebond R (voir la fléche R) sur le prolongement 10 du bras 1 qui tend à tourner dans le sens des aiguilles d'une montre autour de son axe 4 de liaison au carter 3. L'axe 6 étant solidaire du carter 3, le levier à trois bras 5 tourne en sens inverse autour de l'axe 6 au cours de la rotation de rebond du prolongement 10, ce qui entraîne un léger déplacement vers la droite de la figure et donc vers l'axe 30 de la roue arrière, de la ceinture de support 15 du bloc de suspension et d'amortissement 13, par suite de la rotation concomitante du bras court 11 du levier 5. La rotation du même angle du bras long 28 tire par contre la bielle 26 vers la gauche de la figure d'une valeur beaucoup plus considérable et la liaison de la plaque 25 à la bielle longue 27 oblige la tige 22 à rentrer à l'intérieur du corps d'amortisseur 12 pour comprimer le ressort de suspension 21 qui constitue le moteur de la rotation « de rebond » du bras 1.

Pendant la course de rentrée de la tige de piston 22, le piston d'amortisseur 17 présente seulement un passage très étranglé et taré à une pression élevée pour assurer la liaison entre ses deux faces et l'amortissement hydraulique est maximal. Après le retour amorti de la suspension en position de rebond, le ressort 21, la collerette 20 et la vis de réglage 16 viennent occuper l'espace libre de débattement 41 ménagé en-dessous du carter 3 et au choc suivant sur la roue 2, le bras support 1 peut à nouveau tourner dans le sens opposé à celui des aiguilles d'une montre pour ramener les leviers et bielles de suspension dans la position de choc représentée sur la figure en faisant sortir la tige de piston 22 vers l'extérieur. Au cours de la course « de choc » du piston d'amortisseur 17, c'est-à-dire de son déplacement vers la droite de la figure, l'étranglement et la pression de tarage du passage entre les deux faces du piston 17 sont généralement plus faibles qu'au rebond ce qui permet d'améliorer l'adhérence tout en limitant tout de même les risques de talonnement de la butée 31 sur le corps d'amortisseur 12.

L'épure de suspension, c'est-à-dire les longueurs relatives respectives des bras du levier 5, des bielles 8, 26 et 27 ainsi que leurs positions d'articulation et la position de l'axe 6 et de l'axe du corps d'amortisseur 12 sont choisies de préférence de telle façon que la tige mobile 12 reste sensiblement parallèle, soit au chemin de roulement 19, soit à l'axe général 32 du bras de suspension ou bien, le cas échéant, occupe une position moyenne entre ces deux dernières positions de manière que la collerette 20a d'appui du ressort 21 se débatte de façon uniquement axiale à l'intérieur de son logement 41 en dessous du carter 3 et occupe ainsi un encombrement minimal au cours de ce débattement. Bien entendu, il est possible de prévoir une épure de suspension dans laquelle les bielles 26 et 27 et, le cas échéant, la biellette 34 sont reliées au raccord d'articulation 23 ou à la tige 22 par un axe d'articulation commun remplaçant la plaque d'articulation 25. L'ensemble ou une partie du dispositif de suspension peut être recouvert d'un carénage aérodynamique ou de protection.

La biellette de frein 34 est soumise à des efforts axiaux au cours du freinage pour s'opposer au couple de freinage sur la roue 2 qui tend à faire tourner la plaque de frein 35 dans le sens opposé à celui des aiguilles d'une montre. Ainsi, au cours d'un freinage sur la roue arrière 2, la bielle 34 subit une traction vers la droite de la figure qui tend à tirer la tige 22 vers la droite également et à comprimer le ressort 21. Ce couplage des effets de suspension et de freinage exerce un effet bénéfique car il s'oppose partiellement au délestage de la roue arrière au cours du freinage qui se manifeste par une plongée de la suspension avant appelée « salut » en termes de motocycle.

Le dispositif de suspension et d'amortissement qui vient d'être décrit en application à une roue motrice arrière de motocycle peut être appliquée également à une roue avant de motocycle et à une roue de véhicule en général supportée par un bras support rotatif. Selon d'autres modes de réalisation, le bloc 13 de suspension et d'amortissement ainsi que les bielles et biellettes de liaison peuvent être disposés au-dessus du bras support 1, le ressort de suspension 21 étant par exemple interposé entre le corps d'amortisseur 12 et le raccord d'articulation 23, la tige de piston de ressort 20 étant alors supprimée.

## Revendications

1. Dispositif de suspension et/ou d'amortissement d'un bras support rotatif d'une roue de véhicule telle que la roue arrière d'un motocycle, ledit bras support étant susceptible de se débattre par rotation autour d'un axe de liaison solidaire du châssis ou de la caisse du véhicule pour coopérer avec au moins un organe de suspension et/ou d'amortissement tel qu'un ressort et/ou un amortisseur, caractérisé en ce qu'il comporte, disposés sur un côté du bras support (1), un levier à trois bras (5) monté rotatif sur un axe de levier (6) sensiblement parallèle à l'axe de liaison (4) et solidaire du châssis (3) du véhicule et dont un bras moyen (9) est articulé par l'intermédiaire d'une bielle courte (8) à un prolongement (10) du bras support (1) proche de l'articulation de liaison avec le châssis (3), tandis qu'un second bras court (11) sensiblement opposé au bras moyen (9) par rapport à l'articulation (6) du levier à trois bras sur le châssis, est relié à rotation au corps (15, 12) d'un bloc (13) de suspension et/ou d'amortissement à tige(s) (20, 22) mobile(s) en translation et qu'un troisième bras long (28) dudit levier à trois bras (5) dirigé vers la roue (2) du véhicule est articulé à l'une des extrémités d'une bielle moyenne (26) dont l'autre extrémité est articulée à la tige mobile (22) du bloc (13) de suspension et/ou d'amortissement, elle-même articulée à l'une des extrémités d'une bielle longue (27) dont l'autre extrémité est articulée au bras support (1) du côté de la roue de manière à suspendre le bloc (13) de suspension et/ou d'amortissement en ciseaux entre, d'une part, le second bras court (11) du levier (5) à trois bras et, d'autre part, l'articulation de sa tige mobile (22) aux bielles moyenne (26) et longue (27).

2. Dispositif selon la revendication 1, caractérisé en ce que la tige mobile en translation (20) du bloc (13) de suspension et/ou d'amortissement est solidaire d'une collerette (20a) qui vient en appui sur l'extrémité d'au moins un ressort hélicoïdal de suspension (21) monté en compression de façon que son autre extrémité soit en appui sur le corps (12) du bloc de suspension.

3. Dispositif selon l'une des revendications 1 ou 2, caractérisé en ce que, d'une part, la longueur des bras (9, 11, 28) du levier à trois bras (5) ainsi que la position de l'axe de levier (6) par rapport à l'axe de liaison (4) et, d'autre part, la longueur des bielles courte (8), moyenne (26) et longue (27), ainsi que la position de leurs axes d'articulation, sont choisies de telle façon que la tige mobile (20, 22) du bloc de suspension et/ou d'amortissement reste sensiblement parallèle à la surface de roulement (19) de la roue (2) au cours du débattement de suspension du bras support (1).

4. Dispositif selon l'une des revendications 1 ou 2, caractérisé en ce que, d'une part, la longueur des bras (9, 11, 28) du levier à trois bras (5) ainsi que la position de l'axe de levier (6) par rapport à l'axe de liaison (4) et, d'autre part, la longueur des bielles courte (8), moyenne (26) et longue (27), ainsi que la position de leurs axes d'articulation, sont choisies de telle façon que la tige mobile (20, 22) du bloc (13) de suspension et/ou d'amortissement reste sensiblement parallèle à l'axe général (32) du bras support rotatif (1) au cours du débattement de suspension de ce bras support (1).

5. Dispositif selon l'une des revendications 1 à 4, pour un véhicule tel qu'un motocycle, comportant un bloc moteur-transmission d'entraînement du véhicule, caractérisé en ce que le corps (12) de suspension et/ou d'amortissement est logé principalement en dessous du bloc moteur-transmission (3) sur lequel est articulé le levier à trois bras (5) dont le bras court (11) est relié au corps (12) de suspension et/ou d'amortissement à proximité de la sortie de ce corps (12) hors de la projection verticale du bloc moteur-transmission (3).

6. Dispositif selon l'une des revendications 1 à 5, caractérisé en ce que la bielle moyenne (26) et la bielle longue (27) sont articulées ensemble à la tige mobile (22) du corps (12) de suspension et/ou d'amortissement par l'intermédiaire d'un axe d'articulation commun.

7. Dispositif selon l'une des revendications 1 à 5, caractérisé en ce que la bielle moyenne (26) et la bielle longue (27) sont articulées ensemble à la tige mobile (22) du corps (12) de suspension et/ou d'amortissement par l'intermédiaire d'une pièce de liaison (25, 23) solidaire ou rendue solidaire de ladite tige mobile (22).

8. Dispositif selon la revendication 7, caractérisé en ce que la pièce de liaison (25, 23) est articulée à une extrémité d'une biellette de frein (34) dont l'autre extrémité est articulée à un support d'étrier de frein (35) recevant le couple de réaction de freinage de la roue (2) et susceptible de tourner angulairement autour de l'axe (30) de la roue (2) sous l'effet du déplacement de la pièce de liaison (25, 23).

9. Dispositif selon l'une des revendications 1 à 8, caractérisé en ce qu'en position d'extension maximale de la tige mobile (22) par rapport au corps (12) de suspension et/ou d'amortissement, la bielle longue (27) est inclinée sensiblement à 45° par rapport à l'axe général (32) du bras support (1).

**Claims**

1. Device for suspension and/or damping a rotary support arm for a vehicle wheel, such as the rear wheel of a motorcycle, said support arm being adapted to swing rotatively about a connecting axle integrally connected to the frame or the body of the vehicle, so as to cooperate with at least one suspension and/or damping member, such as a spring or a damper, characterized in that it comprises, on one side of said support arm (1), a three-arms lever (5) rotatably mounted on a lever axle (6) substantially parallel to the connecting axle (4) and integral with the frame (3) of the vehicle, one medium arm (9) of said lever being hinged through a short connecting rod (8) to an extension (10) of said support arm (1) in the vicinity of the connection to the frame (3), while a second short arm (11) which is substantially opposed to the medium arm (9) with respect to the connection (6) of said three-arms lever to said frame, is rotatably connected to the body (15, 12) of a suspension and/or damping block (13) having at least one rod (20, 22) movable for translational displacement, whereas a third long arm (28) of said three-arms lever (5), which is directed toward the wheel (2) of the vehicle, is hinged to one of the ends of a medium connecting rod (26) the other end of which is hinged to the movable rod (22) of the suspension and/or damping block (13), said slideable rod being hinged to one of the ends of a long connecting rod (27) the other end of which is hinged to the support arm (1) on the side of the wheel, so as to spring in a scissors-like manner the suspension and/or damping block (13) between on the one hand the second short arm (11) of the three-arms lever (5) and on the other hand the hinge connection of the movable rod (22) thereof to said medium and long connecting rods (26 and 27).

2. Device according to claim 1, characterized in that said translationally movable rod (20) of said suspension and/or damping block (13) is integral with a collar (20a) which abuts on the end of at least one helical suspension spring (21) mounted as a compression spring in such a manner that its other end engages the body (12) of said suspension block.

3. Device according to any one of claims 1 and 2, characterized in that, on the one hand, the length of the arms (9, 11, 28) of the three-arms lever (5) as well as the position of the lever axle (6) with respect to the connecting axle (4) and, on the other hand, the length of said short, medium and long connecting rods (8, 26, 27, respectively), as well as the position of their hinge axles are so selected that said movable rod (20, 22) of said suspension and/or damping block remains substantially parallel to the rolling surface (19) of the wheel (2) during the springed movements of said support arm (1).

4. Device according to any one of claims 1 and 2, characterized in that, on the one hand the length of the arms (9, 11, 28) of said three-arms lever (5), as well as the position of the lever axle (6) with respect to said connecting axle (4) and, on the other hand, the length of said short, medium and long connecting rods (8, 26, 27, respectively), as well as the position of their hinge axles are so selected that said movable rod (20, 22) of said suspension and/or damping block (13) remains substantially parallel to the general axis (32) of the rotatable support arm (1) during the springed movements of said support arm (1).

5. Device according to any one of claims 1 to 4, for a vehicle such as a motorcycle, comprising a motor-gear box block for driving the vehicle, characterized in that the suspension and/or damping body (12) is mainly disposed underneath the motor-gear box block (3) to which is hinged said three-arms lever (5) the short arm (11) of which is connected to the suspension and/or damping block in the vicinity of the location at which said body (12) protrudes out of the vertical projection of the motor-gear box block (3).

6. Device according to any one of claims 1 to 5, characterized in that both the medium connecting rod (26) and the long connecting rod (27) are hinged to said movable rod (22) of said suspension and/or damping body (12) through the intermediary of a common hinge axle.

7. Device according to any one of claims 1 to 5, characterized in that the medium connecting rod (26) and the long connecting rod (27) are both hinged to the movable rod (22) of said suspension and/or damping body (12) through the intermediary of a connecting piece (25, 23) integral with or integrally connected to said movable rod (22).

8. Device according to claim 7, characterized in that said connecting piece (25, 23) is hinged to one end of a brake connecting rod (34) the other end of which is hinged to a brake callipers bracket (35) receiving the braking reaction torque of the wheel (2) and adapted to rotate about the axle (30) of said wheel (2) under the effect of the movement of said connecting piece (25, 23).

9. Device according to any one of claims 1 to 8, characterized in that in the position of maximum extension of the movable rod (22) with respect to said suspension and/or damping body (12) said long connecting rod (27) is inclined at an angle of substantially 45° with respect to the general axis (32) of said support arm (1).

**Patentansprüche**

1. Vorrichtung zur Aufhängung und/oder Dämpfung eines drehbaren Tragarms eines Fahrzeugrads, wie Hinterrad eines Motorrads, wobei dieser Tragarm um eine mit dem Fahrzeugchassis oder der Karosserie fest verbundene Verbindungsachse hin-und-herschwenkbar ist, um mit wenigstens einem Aufhängeorgan und/oder Dämpfungsorgan, wie Feder und/oder Dämpfer zusammenzuwirken, dadurch gekennzeichnet, dass sie einer auf einer Seite des Tragarms (1) angeordnete dreiarmigen Hebel (5), der drehbar auf einer zur Verbindungsachse (4) wesentlich parallelen und mit dem Fahrzeug Chassis (3) fest verbundenen Hebelachse (6) angeordnet ist umfasst, wobei ein mittlerer Arm (9) des Hebels über eine kurze Schubstange (8) an einen Verlängerungsteil (10) des Tragarms (1) angelenkt ist, welcher Verlängerungsteil sich in Nähe des die Verbindung mit dem Chassis (3) herstellenden Gelenks befindet, während ein zweiter kurzer Arm (11) dem mittleren Arm (9) in bezug auf die Anlenkstelle zwischen dem dreiarmigen Hebel und dem Chassis wesentlich gegenüberliegend angeordnet und drehbar am Körper (15, 12) eines Aufhängungs= bzw. Dämpfungsblocks mit verschiebbarer Stange (bzw. verschiebbaren Stangen) (20, 22) angeordnet ist und ein dritter, langer Arm (28) des dreiarmigen Hebels (5) dem Fahrzeugrad (2) zugewendet und an eines der Enden einer mittleren Schubstange (26) angelenkt ist, deren anderes Ende an die verschiebbare Stange (22) des Aufhängungs= bzw. Dämpfungsblocks (13) angelenkt ist, welche letztere Stange an eines der Enden einer langen Schubstange (27) angelenkt ist, deren anderes Ende an den Tragarm (1) radseitig angelenkt ist, um den Aufhängungs= bzw. Dämpfungsblock (13) scherenartig zwischen einerseits dem zweiten kurzen Arm (11) des dreiarmigen Hebels (5) und andererseits der Anlenkstelle seiner verschiebbaren Stange (22) an die mittlere und die lange Schubstange (26 bzw. 27) aufzuhängen.

2. Vorrichtung nach Anspruch 1, dadurch gekennzeichnet, dass die verschiebbare Stange (20) des Aufhängungs= bzw. Dämpfungsblocks (13) mit einem Kragen (20a) fest verbunden ist, der sich auf einem Ende wenigstens einer Aufhängungs-Schraubenfeder (21) abstützt, welche als Druckfeder derart eingebaut ist, dass ihr anderes Ende sich am Körper (12) des Aufhängungsblocks abstützt.

3. Vorrichtung nach einem der Ansprüche 1 und 2, dadurch gekennzeichnet, dass einerseits die Länge der Arme (9, 11, 28) des dreiarmigen Hebels (5) sowie die Lage der Hebelachse (6) in bezug auf die Verbindungsachse (4) und andererseits die Länge des kurzen, mittleren und langen Schubstange (8 bzw. 26 bzw. 27), sowie die Lage ihrer Gelenkachsen derart gewählt sind, dass die verschiebbare Stange (20, 22) des Aufhängungs= bzw. Dämpfungsblocks wesentlich parallel zur Fahrfläche (19) des Rades (2) verbleibt, wenn der Tragarm (1) seine Aufhängungsschwenkbewegungen durchführt.

4. Vorrichtung nach einem der Ansprüche 1 und 2, dadurch gekennzeichnet, dass einerseits die Länge der Arme (9, 11, 28) des dreiarmigen Hebels (5) und die Lage der Hebelachse (6) in bezug auf die Verbindungsachse (4) und andererseits die Länge der kurzen, mittleren und langen Schubstange (8 bzw. 26 bzw. 27) sowie die Lage ihrer Gelenkachsen derart gewählt sind, dass die verschiebbare Stange (20, 22) des Aufhängungs= bzw. Dämpfungsblocks (13) wesentlich parallel zur mittleren Achse (32) des drehbaren Tragarms (1) verbleibt, wenn dieser Tragarm (1) seine Aufhängungsschwenkbewegungen durchführt.

5. Vorrichtung nach einem der Ansprüche 1 bis 4, für ein Fahrzeug wie ein Motorrad, mit einem Motor= und Antriebsgetriebeblock für das Fahrzeug, dadurch gekennzeichnet, dass der Aufhängungs= bzw. Dämpfungskörper (12) hauptsächlich unterhalb des Motor-Getriebeblocks (3) angeordnet ist, an welchen der dreiarmige Hebel (5) angelenkt ist, dessen kurzer Arm (11) mit dem Aufhängungs= bzw. Dämpfungskörper (12) in Nähe derjenigen Stelle verbunden ist, an welcher letzterer aus der Vertikalprojektion des Motor-Getriebeblocks (3) herausragt.

6. Vorrichtung nach einem der Ansprüche 1 bis 5, dadurch gekennzeichnet, dass die mittlere und die lange Schubstange (26 bzw. 27) vermittels einer gemeinsamen Gelenkachse gemeinsam an die verschiebbare Stange (22) des Aufhängungs= bzw. Dämpfungskörpers angelenkt sind.

7. Vorrichtung nach einem der Ansprüche 1 bis 5, dadurch gekennzeichnet, dass die mittlere und die lange Schubstange (26 bzw. 27) vermittels eines mit der verschiebbaren Stange (22) fest verbundenen Verbindungsstücks (25, 23) gemeinsam an die verschiebbare Stange (22) des Aufhängungs= bzw. Dämpfungskörpers (12) angelenkt sind.

8. Vorrichtung nach Anspruch 7, dadurch gekennzeichnet, dass das Verbindungsstück (25, 23) an ein Ende einer Bremsschubstange (34) angelenkt ist, deren anderes Ende an einem Bremsgabelhalter (35) angelenkt ist, der das Bremsdrehmoment des Rades (2) aufnimmt und um die Radachse (30) unter Einwirkung der Bewegung des Verbindungsstücks (25, 23) drehbar ist.

9. Vorrichtung nach einem der Ansprüche 1 bis 8, dadurch gekennzeichnet, dass bei in bezug auf den Aufhängungs= bzw. Dämpfungskörper (12) maximal ausgefahrener verschiebbarer Stange (22) die lange Schubstange (27) unter wenigstens annähernd 45° in bezug auf die mittlere Achse (32) des Tragarms geneigt ist.

0 168 274